# EUROPEAN PATENT SPECIFICATION

(11) **EP 1 819 096 B1**
(45) Date of publication and mention of the grant of the patent: **24.10.2012**
(21) Application number: 05818628.9
(22) Date of filing: 02.12.2005
(51) Int. Cl.: H04L 12/24

(54) **A METHOD FOR ACQUIRING NETWORK KEY PERFORMANCE INDICATORS AND THE KEY PERFORMANCE INDICATORS GROUPWARE THEREOF**
VERFAHREN ZUM ERHALTEN VON SCHLÜSSELINDIKATOREN DER NETZWERKLEISTUNG UND DAZUGEHÖRIGE SCHLÜSSELINDIKATOREN GROUPWARE
PROCEDE POUR L'ACQUISITION D'INDICATEURS CLE DE PERFORMANCE DE RESEAU ET LOGICIEL DE GROUPE D'INDICATEURS CLE DE PERFORMANCE CORRESPONDANT

(30) Priority: 04.12.2004 CN 200410101015
(43) Date of publication of application: 15.08.2007
(73) Proprietor: Huawei Technologies Co., Ltd., Longgang District, Shenzhen Guangdong 518129 (CN)
(72) Inventor: YANG, Li, Huawei Administration Building, Shenzhen, Guangdong 518129 (CN)
(74) Representative: Kreuz, Georg Maria
(86) International application number: PCT/CN2005/002074
(87) International publication number: WO 2006/058500

(56) References cited:
- WO-A-01/89141
- WO-A-03/009162
- WO-A1-02/21774
- WO-A1-03/037019
- WO-A1-03/055251
- US-A1- 2003 120 771
- US-A1- 2003 156 537
- 3RD GENERATION PARTNERSHIP PROJECT: "3GPP TS 32.412" 3GPP TS 32.412, vol. 6, 1 June 2003 (2003-06-01), XP002462594 3GPP

## Description

### Field of the Invention

The present invention relates to the technology of network performance measurement in a communication system, and more particularly, to a method for acquiring a network Key Performance Indicator (KPI) and a KPI component.

### Background of the Invention

In a communication system, an operator usually needs to evaluate the network quality so as to acquire such information as the network operating state. In the network including sub-networks provided by different manufacturers, the network quality also needs to be evaluated.

At present, the network quality is usually evaluated by a Key Performance Indicator (KPI). Because the industry only standardizes a performance counter for calculating the KPI but does not standardize the definition of the KPI, each manufacturer defines, based on its own understanding of the network, a set of KPIs and a formula for calculating the KPIs to evaluate the network quality. An operator may evaluate the network quality according to the set of KPIs defined by a manufacturer. The KPIs are calculated by an Element Management System (EMS).

If a network is provided by one manufacturer, an operator may evaluate the network quality directly using the KPI provided by the manufacturer. In practice, a network usually includes sub-networks provided by multiple manufacturers. Though the operator may evaluate the sub-networks respectively using corresponding KPIs provided by manufacturers, there is no comparability between the KPIs provided by multiple manufacturers. In addition, there is no definition about how to provide an external KPI interface by an EMS, thus each manufacturer should define and develop its own interface for acquiring the KPI, which delays the development cycle of the EMS and increases the cost of design.

In view of the above, the industry provides another method, in which a KPI calculation formula is defined in advance in a Network Management System (NMS) at the upper layer of the EMS, and the NMS calculates the KPI of the network according to a performance counter value and the KPI calculation formula in response to acquiring the performance counter value from the EMS.

At present, however, there is no mature NMS KPI calculation component for calculating a KPI in the industry yet. Because the NMS manufacturers and the network device manufacturers emphasize particularly on different comprehensions of KPI, the KPI calculated by the NMS may not be accepted by an operator.

To sum up, the KPI should be calculated by an EMS or NMS in the communication system presently, there is no technichal scheme for calculating a KPI independently in the industry yet.

US 2003/156537 A1 discloses a method and node for supporting PDSN load optimization in a CDMA2000 network. The method includes the step of collecting data 310, so-called performance indicators (PI), and the step of performing calculations using the selected data by the processing unit, i.e. transforming the PIs into so-called Key Performance Indicators KPIs.

WO 01/89141 A2 discloses a method for identifying and locating performance issues in multi-technology wide area networks- More particularly, the method includes: monitoring individual components in the network to identify specific components whose performance has fallen below a predetermined threshold, and monitoring the aggregate performance of the performance of the network to create KPIs representative of the performance of the network as a whole.

US 2003/120771 A1 discloses a telecommunication network management system monitoring compliance with a service level agreement. More particularly, the system includes a data collector receiving service information and converting the service information into primary parameters, a performance data manager receiving the primary parameters and calculating values of secondary parameters from the primary parameters, and a service level objective monitor.

WHO 03/009162 A1 discloses data collection agents (DCAs) for storing the results of the measurement either locally or in a remote database, a processing module interconnected with the DCA, and a comparison module interconnected with the processing module, wherein the processing module calculates at least a first variance statistic and a second variance statistical scheme for calculating a KPI independently in the industry yet.

### Summary of the Invention

Embodiments of the present invention provide a method for acquiring a Key Performance Indicator (KPI) of a network. The method the method is applied to the network where at least one KPI calculator is set and the KPI calculator is independent of a Network Management System, NMS, and an Element Management System, EMS; and the method includes:
acquiring, by the KPI calculator, a performance counter value in the EMS through through a Performance Management Integration Reference Point, PM IRP, interlace;
calculating, by the KPI calculator, KPI data according to the performance counter value; and
saving the KPI data.

Preferably, the method further includes: acquiring, by a KPI user, the KPI data through an interface set in the KPI calculator.

Embodiments of the present invention provide a Key Performance Indicator (KPI) component. The KPI component includes:
at least one KPI calculator and an Element Management System, EMS;
wherein the KPI calculator is independent of a Network Management System, NMS, and the EMS; and the KPI calculator is configured for acquiring a performance counter value from the EMS through a Performance Management Integration Reference Point, PM IRP, interface, calculating and saving KPI data according to the performance counter value;
the EMS is configured for sending the performance counter value to the KPI calculator through the PM IRP, interface.

The component further includes: a KPI user for sending a request for acquiring the KPI data to the KPI calculator through a KPI Management Integration Reference Point interface, and acquiring the KPI data from the KPI calculator.

Embodiments of the present invention provide a Key Performance Indicator (KPI) calculator, and the KPI calculator includes:
a first module for acquiring a performance counter value in an Element Management System (EMS) through a Performance Management Integration Reference Point, PM TRP, interface; and a second module for calculating KPI data according to the performance counter value, and saving the KPI data.

According to the embodiments of the present invention, the KPI calculator is set and the external interface is set between the KPI calculator and the EMS to enable the KPI calculator to calculate the KPI data. KPI calculator is not a part of the EMS or the NMS, and the calculation is independent of the EMS or the NMS.

### Brief Description of the Drawings

Figure 1 is a schematic diagram for a KPI calculator managing IRP classes based on an interface set in accordance with an embodiment of the present invention.
Figure 2 is a schematic diagram illustrating the architecture of a KPI component in accordance with an embodiment of the present invention.
Figure 3 is a sequence chart illustrating the message stream for acquiring the KPI data through a KPI calculator in accordance with an embodiment of the present invention.
Figure 4 is a sequence chart illustrating the message flow for a KPI user acquiring a large number of KPI data in accordance with an embodiment of the present invention.
Figure 5 is a flowchart of the KPI user acquiring a large number of KPI data corresponding to Figure 4.
Figure 6 is a schematic diagram illustrating the relation between components in accordance with an embodiment of the present invention.

### Detailed Description of the Invention

Embodiments of the present invention provide a KPI component including a KPI calculator with an external interface for receiving a performance counter value and an interface for sending a calculation result. The KPI calculator calculates a KPI according to the KPI calculation formula with the performance counter value, and sends the calculation result through the interface.

An external interface may be set between the KPI calculator and the EMS to enable the KPI calculator to acquire the performance counter value because the performance counter value may be acquired from the EMS. The external interface may be an existing interface or an interface customized so long as it can acquire the performance counter value from the EMS. Taking a Performance Management Integration Reference Point (PM IRP) interface as an example, embodiments of the present invention are described. The PM IRP is a managed object for performance management, manages performance data collection and a performance threshold. The PM IRP interface is specifically defined in 3GPP32.412.

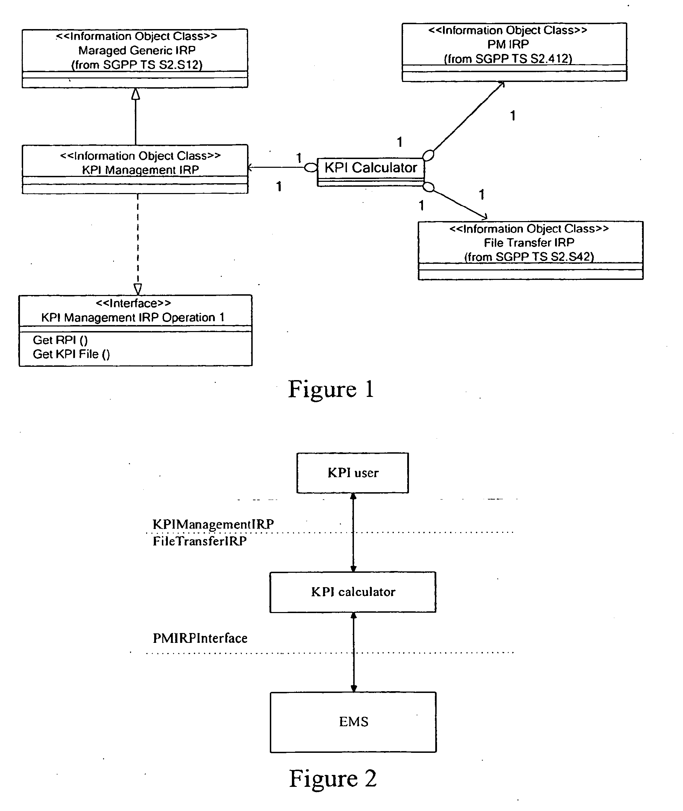

The KPI calculator may send a calculation result to a KPI user, i.e. a client. At this point, the interface set for sending a calculation result may be the interface between the KPI calculator and the KPI user. The interface, defined in the embodiment of the present invention, is referred to as a KPI management IRP interface, i.e. the KPIManagementIRP interface. The KPIManagementIRP interface may inherit from a generic managed IRP, i.e. ManagedGenericIRP, defined by 3GPP 32.312. The KPI calculator contains an instance of KPIManagementIRP; a KPI management IPR operation 1 interface, i.e. the KPIManagementIRP_Operation_1 interface, implemented by the KPIManagementIRP is shown in Figure 1.

The KPIManagementIRP_Operation_1 interface defines an operation for the KPIManagementIRP acquiring the KPI data. The definition includes:
a return value type: enumeration (successful, failed, partially successful);
a parameter list: a managed object identifier list for information input, which may be a Distinguished Name (DN) list; a DN for information input defined in the 3GPP32 series recommendation; a KPI type indication list for information input, which may be a character string list; a KPI list for information output, which includes a managed object identifier list and a KPI type indication list;
exception: no;
precondition: the KPI data having been saved in the KPI calculator;
postcondition: the KPI user having acquired the KPI data.

In the definition above, the portion for information output in the parameter list may be defined as the location of a KPI data file which is a character string. In this way, the KPI user acquires the KPI data file according to the location instead of acquiring a KPI directly from the KPI list as defined above.

Based on the settings above, the structure of the KPI component including a KPI user, a KPI calculator and an EMS in accordance with an embodiment of the present invention is shown in Figure 2. The KPI user interacts with the KPI calculator through the KPIManagementIRP interface while the EMS interacts with the KPI calculator through the PM IRP interface.

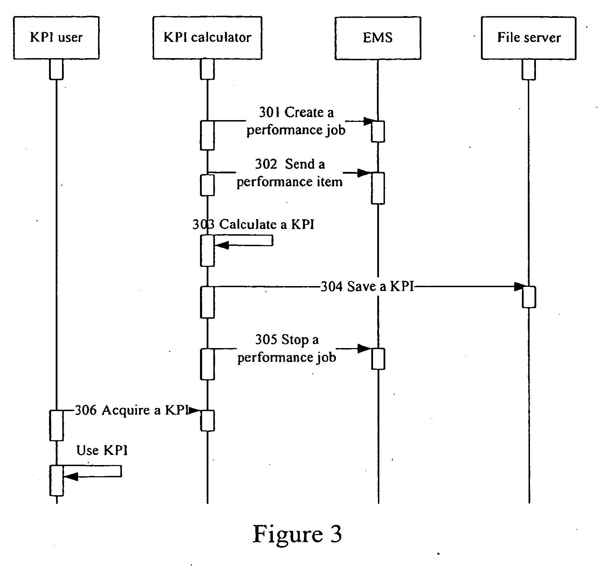

Figure 3 is a sequence chart illustrating the message stream for acquiring the KPI data through a KPI calculator in accordance with an embodiment of the present invention. According to Figure 3, the process of acquiring the KPI data is described below.

In Step 301, in order to provide a KPI to the KPI user, the KPI calculator creates and manages a performance job in the EMS through the PM IRP interface to acquire a performance counter value of an ongoing network.

The performance job may be created by creating measurement job of the PM IRP interface, i.e. createMeasurementJob, because the interface between the KPI calculator and the EMS is a PM IRP interface. The definition of the createMeasurementJob may be referred to in 3GPP 32.412.

In Step 302, the EMS sends a performance counter value to the KPI calculator according to a sending period within the duration of the performance job.

The PM IRP interface between the EMS and the KPI calculator may be a File Transfer IRP, i.e. FileTransferIRP, to transfer the performance counter value in a file mode. The definition of the file mode may be referred to in 3GPP 32.342.

In Steps 303-304, in response to acquiring the performance counter value, the KPI calculator may calculate KPI data according to the performance counter value and save the KPI data.

The KPI calculator may save the KPI data directly in itself. It may also save the KPI data in other devices of the communication system if the KPI calculator is unable to store the KPI value, for example, save the KPI data in a file server.

In Step 305, in response to acquiring all the performance counter values necessary for calculating the KPI data, the KPI calculator sends information of performance job stop to the EMS to stop the performance job created previously.

Similar to creating the performance job, the performance job may be stopped by stopping measurement job of the PM IRP interface, i.e. stopMeasurementJob.

In Step 306, the KPI user sends to the KPI calculator a request for acquiring a KPI designated through the KPIManagementIRP interface to acquire the KPI from the KPI calculator.

The interaction for acquiring the KPI may be performed by the operation of acquiring a KPI, defined by KPIManagementIRP_Operation_1.

Specifically, based on the operation defined by KPIManagementIRP_Operation_1, in response to determining that the KPI data have been saved in the KPI calculator, the KPI user sends the request to the KPI calculator through the KPIManagementIRP interface. The request includes a managed object identifier list and a KPI type indication list. The managed object identifier list may be a DN list.

In response to receiving the request, the KPI calculator sends to the KPI user a message carrying a KPI list. If the KPI data are directly saved in the KPI calculator, the KPI calculator directly acquires the KPI data. If the KPI data are saved in another device such as the file server, the KPI calculator further acquires the KPI data from another device before sending the KPI data to the KPI user.

According to the process above, the KPI user has acquired the KPI data, and may process the KPI data based on the demands of the KPI user, for example, present KPIs by a diagram or a graphics, sequence the KPIs according to different manufacturer instances of a managed object class, or determine the operating state of the network according to the KPIs, such as the quality of service of cells in the network.

In Step 306 above, after the KPI user sends to the KPI calculator the request for acquiring the KPI designated through the KPIManagementIRP interface, the KPI calculator directly sends the KPI data to the KPI user. In practice, if there is a large number of the KPI data, a file transfer IRP of 3GPP, i.e. FileTransferIRP, may be used to guarantee correct transmission of the KPI data, i.e. the FileTransferIRP transmits a KPI data file from the KPI calculator to the KPI user.

Specifically, the KPI calculator needs to prepare the KPI data file containing the KPI data necessary for the KPI user, and the KPI user acquires the KPI data file through a file transfer protocol.

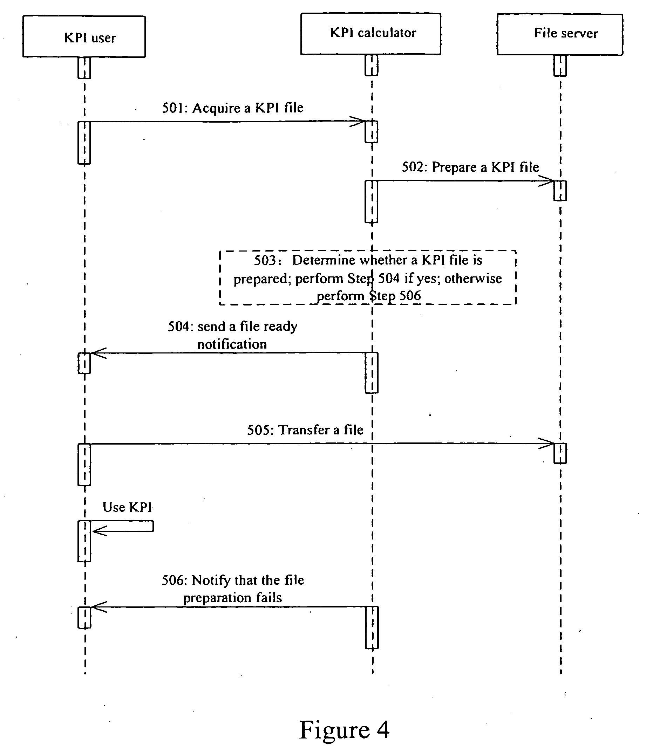

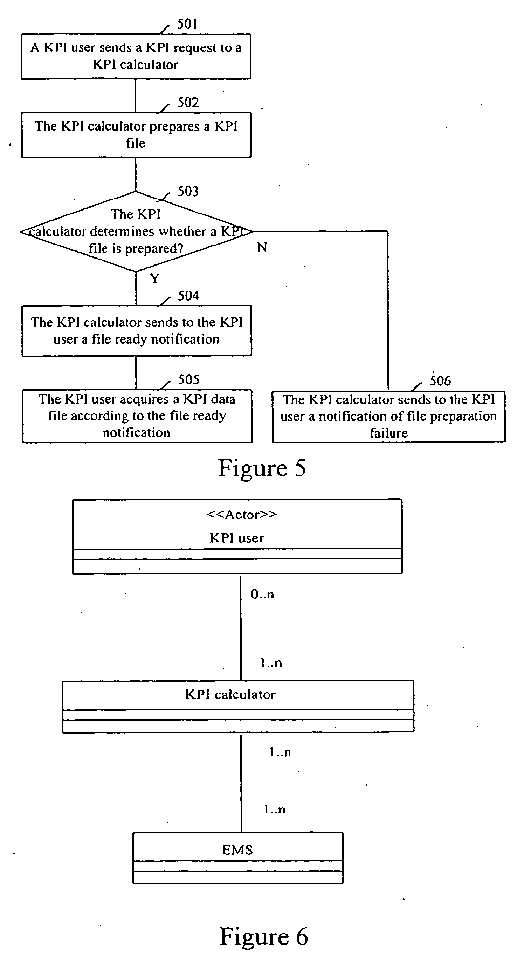

Figure 4 is a sequence chart illustrating the message flow for a KPI user acquiring a large number of KPI data in accordance with an embodiment of the present invention. Figure 5 is a flowchart of a KPI user acquiring a large number of KPI data corresponding to Figure 4. The process of acquiring a large number of KPI data is similar to Step 306 shown in Figure 3, and is described below.

In Step 501, the KPI user sends to the KPI calculator a request for acquiring a KPI designated corresponding to a managed object designated.

In Step 502, in response to receiving the request, the KPI calculator prepares a KPI data file.

Specifically, if the KPI data calculated have been saved in the KPI calculator, the KPI calculator directly determines KPI data according to the managed object, and prepares the KPI data file containing the KPI data. If the KPI data has been saved in the file server, the KPI calculator notifies the file server to prepare the KPI data file containing the KPI data.

In Step 503, the KPI calculator determines whether the KPI data file is ready; if yes, Step 504 would be performed; otherwise, Step 506 would be performed.

Step 504: after the KPI data file is ready, the KPI calculator sends to the KPI user a file ready notification.

The file ready notification contains the location of the KPI data file and the return value type. To send the KPI data file conveniently, a FileTransferIRP is used between the KPI calculator and the KPI user, the definition of the FileTransferIRP interface is referred to in 3GPP TS 32.341, TS 32.342, TS 32.343 and TS 32.344. In this process, the notifyFileReady of FileTransferIRP may be used to send the file ready notification.

In Step 505, the KPI user acquires the KPI data file according to the file ready notification, and terminates the process.

Specifically, the KPI user determines the location of the KPI data file according to the file ready notification, and acquires the KPI data file according to the location. The KPI user may acquire the KPI data file through a standardized file transfer protocol, such as the FTP. The KPI user then performs relevant operations using the KPI data file.

In Step 506, when the KPI data file is not ready yet, the KPI calculator sends to the KPI user a notification of file preparation failure, and terminates the process.

By far, the process of acquiring a large number of the KPI data is realized.

The KPI user, the KPI calculator, the EMS and the file server mentioned above are all logic components and are independent of the actual physical layout. There may be multiple KPI calculators, multiple EMSs, multiple KPI users or no KPI user in the KPI component. The KPI users and the KPI calculators may be in a multiple-to-multiple relation, similarly, the EMSs and the KPI calculators may also be in a multiple-to-multiple relation. As shown in Figure 6, the relation between components is in a multiple-to-multiple relation.

With a multiple-to-multiple relation set, one KPI calculator may be set for calculating a KPI related to a cell in a KPI component and another KPI calculator may be further set for calculating a KPI related to a link between the sub-networks. The KPI related to a cell and the KPI related to a link are presented respectively by different KPI users in different modes.

In addition, a KPI may be standardized, a performance counter for calculating a standardized KPI may also be standardized according to 3GPP 32.403. Correspondingly, the KPI calculation formula may also be standardized. Thus an operator may figure out a standardized KPI by the standardized calculation formula so as to compare the performance of the sub-networks provided by different manufacturers using the KPI directly.

Moreover, the KPI calculator in the embodiments of the present invention may calculate a KPI customized by a user as the PM IRP allows a user to create a performance job and report a self-specific counter, i.e. the KPI calculator acquires a performance counter value customized by a user from the EMS through the PM IRP interface and calculates a KPI customized by the user by a KPI calculation formula customized by the user.

The KPI calculator provided in the embodiments of the present invention uses the existing PM IRP interface and FileTransferIRP interface in the 3GPP, the cost of development is thus reduced.

According to the embodiments of the present invention, two modes of transferring the KPI data are provided according to the quantity of the KPI data, and the two modes are adopted for transferring different quantity of the KPI data respectively, thus both efficiency and stability of an interface are ensured.

The technical scheme of the present invention can be applicable to a standardized KPI, a standardized performance counter and a standardized KPI calculation formula, and the operator may thus evaluate different sub-networks of the network using the standardized KPI. The technical scheme of the present invention can also be applicable to a KPI, a performance counter and a KPI calculation formula which are customized by the manufacturers, and the product attribute of each manufacturer may be used, thus the operator has various choices.

In addition, multiple KPI calculators may be simultaneously set to calculate different KPIs respectively in that the KPI calculator in accordance with the embodiments of the present invention is independent of the EMS and the NMS.

The foregoing is only preferred embodiments of the present invention and is not for use in limiting the protection scope thereof. Any modification, equivalent substitution, improvement within the principle of the present invention should be covered in the protection scope of the present invention, which is defined by the appended claims.

## Claims

1. A method for acquiring a Key Performance Indicator, KPI, of a network, wherein
the method is applied to the network where at least one KPI calculator is set and the KEPI calculator is independent of a Network Management System, NMS, and an Element Management System, EMS; and the method comprises:
acquiring, by the KPI calculator, a performance counter value in the EMS(301, 302) through a Performance Management Integration Reference Point, PM IRP, interface;
calculating, by the KPI calculator, KPI data according to the performance counter value(303); and saving the KPI data(304).

2. The method of Claim 1, wherein the acquiring the performance counter value in the EMS through the PM IRP interface(301, 302) comprises:
creating, by the KPI calculator, a performance job in the EMS through the PM IRP interface (301); and
sending, by the EMS, the performance counter value to the KPI calculator through the PM IRP interface according to a sending period in response to creating the performance job by the KPI calculator (302).

3. The method of Claim 2, wherein the creating the performance job in the EMS through the PM IRP interface (301) comprises:
creating the performance job through creating measurement job of the PM IRP interface;
the sending the performance counter value to the KPI calculator through the PM IRP interface (302) comprises:
sending, by the PM IRP interface, the performance counter value in a file transfer mode.

4. The method of Claim 2, further comprising:
sending (305), by the KPI calculator, information of performance job stop to the EMS in response to acquiring all counter values necessary; and
stopping, by the EMS, sending the performance counter value to the KPI calculator in response to receiving the information of performance job stop.

5. The method of Claim 1, wherein the saving the KPI data comprises: saving the KPI data in the KPI calculator or a file server.

6. The method of Claim 1, further comprising: acquiring (306), by a KPI user, the KPI data through an interface set in the KPI calculator.

7. The method of Claim 6, wherein the acquiring the KPI data through the interface (306) comprises:
sending (501), by the KPI user, a request for acquiring the KPI data to the KPI calculator through the interface in response to determining that the KPI calculator has saved the KPI data, wherein the request carries a managed object identifier list corresponding to the KPI data and a KPI type indication list;
sending (502, 503, 504), by the KPI calculator, a message carrying a KPI list in response to receiving the request; and
acquiring (505), by the KPI user, the KPI data from the message

8. The method of Claim 6, wherein the acquiring the KPI data through the interface comprises:
sending (501), by the KPI user, a request for acquiring the KPI data to the KPI calculator through the interface in response to determining that the KPI calculator has saved the KPI data, wherein the request carries a managed object identifier list corresponding to the KPI data and a KPI type indication list;
determining, by the KPI calculator, the KPI data according to the request, preparing a KPI data file according to the KPI data, sending a file ready notification carrying a location of the KPI data file (502, 503, 504); and
determining, by the KPI user, the location of the KPI data file according to the file ready notification, acquiring the KPI data file from the location through a file transfer Integration Reference Point (IRP) set in the KPI calculator (505).

9. The method of Claim 1, wherein the KPI is a standardized KPI; the KPI calculator calculates the KPI data according to a standardized formula; the performance counter value is counted by a standardized performance counter; or
the KPI is a self-specific KPI; the KPI calculator calculates the KPI data according to a self-specific formula; the performance counter value is counted by a self-specific performance counter.

10. A Key Performance Indicator, KPI, component, comprising:
at least one KPI calculator and an Element Management System, EMS;
wherein the KPI calculator is independent of a Network Management System, NMS, and the EMS;
the KPI calculator is configured for acquiring a performance counter value in the EMS through a Performance Management Integration Reference Point, PM IRP, interface, calculating and saving KPI data according to the performance counter value; and
the EMS is configured for sending the performance counter value to each KPI calculator through the PM IRP interface.

11. The component of Claim 10, further comprising:
a KPI user configured for sending a request for acquiring the KPI data to the KPI calculator through a KPI Management Integration Reference Point interface, and acquiring the KPI data from the KPI calculator.

12. The component of Claim 11, wherein the KPI calculator is further configured for sending a message carrying a KPI list to the KPI user according to the request sent by the KPI uses, and the KPI user acquires the KPI data from the message; or
the KPI calculator is further configured for preparing a KPI data file according to the request sent by the KPI user and sending a location of the KPI data file to the KPI user; the KPI user acquires the KPI data file from the location through a file transfer Integration Reference Point, IRP, set in the KPI calculator.

13. The component of Claim 10 or 11, wherein there is at least one EMS.

14. A Key Performance Indicator, KEPI, calculator, being independent of a Network Management System, NMS, and an Element Management System, EMS, of a network, comprising:
a first module configured for acquiring a performance counter value in an Element Management System, EMS, through a Performance Management Integration Reference Point, PM IRP, interface; and
a second module configured for calculating KPI data according to the performance counter value, and saving the KPI data.

15. The KPI calculator of Claim 14, wherein the first module comprises a first sub-module configured for creating a performance job in the EMS through the external interface; and
a second sub-mudule configured for receiving the performance counter value through the external interface sent by the EMS.

16. The KPI calculator of Claim 14, wherein the second module comprises a third sub-maodule configured for calculating the KPI data according to the performance counter value, and a fourth sub-module configured for saving the KPI data in the fourth sub-module itself or saving the KPI data in a file server.

## Patentansprüche

1. Verfahren zum Beschaffen eines Key Performance Indicator KPI eines Netzes, wobei das Verfahren auf das Netz angewandt wird, wobei mindestens ein KPI-Kalkulator eingerichtet ist und der KPI-Kalkulator von einem Network Management System NMS und einem Element Management System EMS unabhängig ist; und das Verfahren Folgendes umfasst:
Beschaffen eines Performance-Zählerwerts in dem EMS (301, 302) durch den KPI-Kalkulator durch eine Schnittstelle des Performance Management Integration Reference Point PM IRP;
Berechnen von KPI-Daten durch den KPI-Kalkulator gemäß dem Performance-Zählerwert (303); und Abspeichern der KPI-Daten (304).

2. Verfahren nach Anspruch 1, wobei das Beschaffen des Performance-Zählerwerts in dem EMS durch die Schnittstelle des PM IRP (301, 302) Folgendes umfasst:
Erzeugen eines Performance-Jobs in dem EMS durch den KPI-Kalkulator durch die Schnittstelle des PM IRP (301); und
Senden des Performance-Zählerwerts durch das EMS zu dem KPI-Kalkulator durch die Schnittstelle des PM IRP gemäß einer Sendeperiode als Reaktion auf das Erzeugen des Performance-Jobs durch den KPI-Kalkulator (302).

3. Verfahren nach Anspruch 2, wobei das Erzeugen des Performance-Jobs in dem EMS durch die Schnittstelle des PM IRP (301) Folgendes umfasst:
Erzeugen des Performance-Jobs durch Erzeugen eines Messungs-Jobs der Schnittstelle des PM IRP; und
das Senden des Performance-Zählerwerts zu dem KPI-Kalkulator durch die Schnittstelle des PM IRP (302) Folgendes umfasst:
Senden des Performance-Zählerwerts durch die Schnittstelle des PM IRP in einem Dateitransfermodus.

4. Verfahren nach Anspruch 2, ferner umfassend:
Senden (305) von Informationen des Performance-Job-Stopps durch den KPI-Kalkulator zu dem EMS als Reaktion auf das Beschaffen aller notwendigen Zählerwerte; und
Stoppen des Sendens des Performance-Zählerwerts zu dem KPI-Kalkulator durch das EMS als Reaktion auf das Empfangen der Informationen des Performance-Job-Stopps.

5. Verfahren nach Anspruch 1, wobei das Abspeichern der KPI-Daten Folgendes umfasst: Abspeichern der KPI-Daten in dem KPI-Kalkulator oder einem Dateiserver.

6. Verfahren nach Anspruch 1, ferner umfassend: Beschaffen (306) der KPI-Daten durch einen KPI-Benutzer durch eine in dem KPI-Kalkulator eingerichtete Schnittstelle.

7. Verfahren nach Anspruch 6, wobei das Beschaffen der KPI-Daten durch die Schnittstelle (306) Folgendes umfasst:
Senden (501) einer Anforderung zum Beschaffen der KPI-Daten durch den KPI-Benutzer zu dem KPI-Kalkulator durch die Schnittstelle als Reaktion auf das Bestimmen, dass der KPI-Kalkulator die KPI-Daten abgespeichert hat, wobei die Anforderung eine den KPI-Daten entsprechende Liste von Kennungen verwalteter Objekte und eine KPI-Typangabeliste führt;
Senden (502, 503, 504) einer Nachricht, die eine KPI-Liste führt, durch den KPI-Kalkulator als Reaktion auf den Empfang der Anforderung; und
Beschaffen (505) der KPI-Daten durch den KPI-Benutzer aus der Nachricht.

8. Verfahren nach Anspruch 6, wobei das Beschaffen der KPI-Daten durch die Schnittstelle Folgendes umfasst:
Senden (501) einer Anforderung zum Beschaffen der KPI-Daten durch den KPI-Benutzer zu dem KPI-Kalkulator durch die Schnittstelle als Reaktion auf das Bestimmen, dass der KPI-Kalkulator die KPI-Daten abgespeichert hat, wobei die Anforderung eine den KPI-Daten entsprechende Liste von Kennungen verwalteter Objekte und eine KPI-Typangabeliste führt;
Bestimmen der KPI-Daten durch den KPI-Kalkulator gemäß der Anforderung, Erstellen einer KPI-Datendatei gemäß den KPI-Daten, Senden einer Datei-Bereitschaftsbenachrichtigung, die einen Ort der KPI-Datendatei führt (502, 503, 504); und
Bestimmen des Orts der KPI-Datendatei durch den KPI-Benutzer gemäß der Datei-Bereitschaftsbenachrichtigung, Beschaffen der KPI-Datendatei von dem Ort durch einen in dem KPI-Kalkulator (505) eingerichteten Integration Reference Point bzw. IRP für Dateitransfer.

9. Verfahren nach Anspruch 1, wobei der KPI ein standardisierter KPI ist; der KPI-Kalkulator die KPI-Daten gemäß einer standardisierten Formel berechnet; der Performance-Zählerwert durch einen standardisierten Performance-Zähler gezählt wird; oder
der KPI ein selbstspezifischer KPI ist; der KPI-Kalkulator die KPI-Daten gemäß einer selbstspezifischen Formel berechnet; und der Performance-Zählerwert durch einen selbstspezifischen Performance-Zähler gezählt wird.

10. Komponente eines Key Performance Indicator KPI, umfassend:
mindestens einen KPI-Kalkulator und ein Element Management System EMS;
wobei der KPI-Kalkulator von einem Network Management System NMS und dem EMS unabhängig ist;
wobei der KPI-Kalkulator dafür ausgelegt ist, einen Performance Zählerwert in dem EMS durch eine Schnittstelle des Performance Management Integration Reference Point PM IRP zu beschaffen und KPI-Daten gemäß dem Performance-Zählerwert zu berechnen und abzuspeichern; und
das EMS dafür ausgelegt ist, den Performance-Zählerwert durch die Schnittstelle des PM IRP zu jedem KPI-Kalkulator zu senden.

11. Komponente nach Anspruch 10, ferner umfassend:
einen KPI-Benutzer, der dafür ausgelegt ist, eine Anforderung zum Beschaffen der KPI-Daten durch eine Schnittstelle des KPI Management Integration Reference Point zu dem KPI-Kalkulator zu senden und die KPI-Daten von dem KPI-Kalkulator zu beschaffen.

12. Komponente nach Anspruch 11, wobei der KPI-Kalkulator ferner dafür ausgelegt ist, eine Nachricht, die eine KPI-Liste führt, gemäß der durch den KPI-Benutzer gesendeten Anforderung zu dem KPI-Benutzer zu senden und der KPI-Benutzer die KPI-Daten aus der Nachricht beschafft; oder
der KPI-Kalkulator ferner dafür ausgelegt ist, gemäß der durch den KPI-Benutzer gesendeten Anforderung eine KPI-Datendatei zu erstellen und einen Ort der KPI-Datendatei zu dem KPI-Benutzer zu senden; und der KPI-Benutzer die KPI-Datendatei von dem Ort durch einen in dem KPI-Kalkulator eingerichteten Integration Reference Point IRP für Dateitransfer beschafft.

13. Komponente nach Anspruch 10 oder 11, wobei mindestens ein EMS vorliegt.

14. Kalkulator des Key Performance Indicator KPI, der von einem Network Management System NMS und einem Element Management System EMS eines Netzes unabhängig ist, umfassend:
ein erstes Modul, das dafür ausgelegt ist, einen Performance-Zählerwert in einem Element Management System EMS durch eine Schnittstelle des Performance Management Integration Reference Point PM IRP zu beschaffen; und
ein zweites Modul, das dafür ausgelegt ist, KPI-Daten gemäß dem Performance-Zählerwert zu berechnen und die KPI-Daten abzuspeichern.

15. KPI-Kalkulator nach Anspruch 14, wobei das erste Modul Folgendes umfasst: ein erstes Teilmodul, das dafür ausgelegt ist, einen Performance-Job in dem EMS durch die externe Schnittstelle zu erzeugen; und
ein zweites Teilmodul, das dafür ausgelegt ist, den durch das EMS gesendeten Performance-Zählerwert durch die externe Schnittstelle zu empfangen.

16. KPI-Kalkulator nach Anspruch 14, wobei das zweite Modul Folgendes umfasst: ein drittes Teilmodul, das dafür ausgelegt ist, die KPI-Daten gemäß dem Performance-Zählerwert zu berechnen, und ein viertes Teilmodul, das dafür ausgelegt ist, die KPI-Daten in dem vierten Teilmodul selbst abzuspeichern oder die KPI-Daten in einem Dateiserver abzuspeichern.

## Revendications

1. Procédé d'acquisition d'un Indicateur de Performance Clé, KPI, d'un réseau,
le procédé étant appliqué au réseau dans lequel au moins un calculateur de KPI est établi et le calculateur de KPI est indépendant d'un Système de Gestion de Réseau, NMS, et d'un Système de Gestion d'Elément, EMS ; et le procédé comprenant :
l'acquisition, par le calculateur de KPI, d'une valeur de compteur de performance dans l'EMS (301, 302) par le biais d'une interface de Point de Référence d'Intégration de Gestion de Performances, PM IRP ;
le calcul, par le calculateur de KPI, des données KPI en fonction de la valeur de compteur de performance (303) ; et la sauvegarde des données KPI (304).

2. Procédé selon la revendication 1, dans lequel l'acquisition de la valeur de compteur de performance dans l'EMS par le biais de l'interface PM IRP (301, 302) comprend :
la création, par le calculateur de KPI, d'une tâche de performance dans l'EMS par le biais de l'interface PM IRP (301) ; et
l'envoi, par l'EMS, de la valeur de compteur de performance au calculateur de KPI par le biais de l'interface PM IRP en fonction d'une période d'envoi en réponse à la création de la tâche de performance par le calculateur de KPI (302).

3. Procédé selon la revendication 2, dans lequel la création de la tâche de performance dans l'EMS par le biais de l'interface PM IRP (301) comprend :
la création de la tâche de performance par la création d'une tâche de mesure de l'interface PM IRP ;
l'envoi de la valeur de compteur de performance au calculateur de KPI par le biais de l'interface PM IRP (302) comprend :
l'envoi, par l'interface PM IRP, de la valeur de compteur de performance dans un mode de transfert de fichier.

4. Procédé selon la revendication 2, comprenant en outre :
l'envoi (305), par le calculateur de KPI, d'informations d'arrêt de la tâche de performance à l'EMS en réponse à l'acquisition de toutes les valeurs de compteur nécessaires ; et
l'arrêt, par l'EMS, de l'envoi de la valeur de compteur de performance au calculateur de KPI en réponse à la réception des informations d'arrêt de la tâche de performance.

5. Procédé selon la revendication 1, dans lequel la sauvegarde des données KPI comprend : la sauvegarde des données KPI dans le calculateur de KPI ou un serveur de fichiers.

6. Procédé selon la revendication 1, comprenant en outre : l'acquisition (306), par un utilisateur de KPI, des données KPI par le biais d'une interface établie dans le calculateur de KPI.

7. Procédé selon la revendication 6, dans lequel l'acquisition des données KPI par le biais de l'interface (306) comprend :
l'envoi (501), par l'utilisateur de KPI, d'une requête d'acquisition des données KPI au calculateur de KPI par le biais de l'interface en réponse à la détermination que le calculateur de KPI a sauvegardé les données KPI, la requête comportant une liste d'identifiants d'objets gérés correspondant aux données KPI et une liste d'indications de types de KPI ;
l'envoi (502, 503, 504), par le calculateur de KPI, d'un message comportant une liste de KPI en réponse à la réception de la requête ; et
l'acquisition (505), par l'utilisateur de KPI, des données KPI à partir du message.

8. Procédé selon la revendication 6, dans lequel l'acquisition des données KPI par le biais de l'interface comprend :
l'envoi (501), par l'utilisateur de KPI, d'une requête d'acquisition des données KPI au calculateur de KPI par le biais de l'interface en réponse à la détermination que le calculateur de KPI a sauvegardé les données KPI, la requête comportant une liste d'identifiants d'objets gérés correspondant aux données KPI et une liste d'indications de types de KPI ;
la détermination, par le calculateur de KPI, des données KPI en fonction de la requête, la préparation d'un fichier de données KPI en fonction des données KPI,
l'envoi d'une notification de fichier prêt comportant un emplacement du fichier de données KPI (502, 503, 504) ; et
la détermination, par l'utilisateur de KPI, de l'emplacement du fichier de données KPI en fonction de la notification de fichier prêt, l'acquisition du fichier de données KPI à partir de l'emplacement par le biais d'un Point de Référence d'Intégration (IRP) de transfert de fichier établi dans le calculateur de KPI (505).

9. Procédé selon la revendication 1, dans lequel le KPI est un KPI normalisé ; le calculateur de KPI calcule les données KPI en fonction d'une formule normalisée ; la valeur de compteur de performance est comptée par un compteur de performance normalisé ; ou
le KPI est un KPI auto-spécifique ; le calculateur de KPI calcule les données KPI en fonction d'une formule auto-spécifique ; la valeur de compteur de performance est comptée par un compteur de performance auto-spécifique.

10. Composant d'Indicateur de Performance Clé, KPI, comprenant :
au moins un calculateur de KPI et un Système de Gestion d'Elément, EMS ; le calculateur de KPI étant indépendant d'un Système de Gestion de Réseau, NMS et de l'EMS ;
le calculateur de KPI étant configuré pour acquérir une valeur de compteur de performance dans l'EMS par le biais d'une interface de Point de Référence d'Intégration de Gestion de Performances, PM IRP, calculer et sauvegarder les données KPI en fonction de la valeur de compteur de performance ; et
l'EMS étant configuré pour envoyer la valeur de compteur de performance à chaque calculateur de KPI par le biais de l'interface PM IRP.

11. Composant selon la revendication 10, comprenant en outre :
un utilisateur de KPI configuré pour envoyer une requête d'acquisition des données KPI au calculateur de KPI par le biais d'une interface de Point de Référence d'Intégration de Gestion KPI, et acquérir les données KPI depuis le calculateur de KPI.

12. Composant selon la revendication 11, dans lequel le calculateur de KPI est configuré en outre pour envoyer un message comportant une liste de KPI à l'utilisateur de KPI en fonction de la requête envoyée par l'utilisateur de KPI ; et l'utilisateur de KPI acquiert les données KPI à partir du message ; ou
le calculateur de KPI est configuré en outre pour préparer un fichier de données KPI en fonction de la requête envoyée par l'utilisateur de KPI et envoyer un emplacement du fichier de données KPI à l'utilisateur de KPI ; et l'utilisateur de KPI acquiert le fichier de données KPI à partir de l'emplacement par le biais d'un Point de Référence d'Intégration (IRP) de transfert de fichier établi dans le calculateur de KPI.

13. Composant selon la revendication 10 ou 11, dans lequel il existe au moins un EMS.

14. Calculateur d'Indicateur de Performance Clé, KPI, indépendant d'un Système de Gestion de Réseau, NMS, et d'un Système de Gestion d'Elément, EMS, d'un réseau, comprenant :
un premier module configuré pour acquérir une valeur de compteur de performance dans un Système de Gestion d'Elément, EMS, par le biais d'une interface de Point de Référence d'Intégration de Gestion de Performances, PM IRP ; et
un second module, configuré pour calculer des données KPI en fonction de la valeur de compteur de performance ; et sauvegarder les données KPI.

15. Calculateur de KPI selon la revendication 14, dans lequel le premier module comprend un premier sous-module configuré pour créer une tâche de performance dans l'EMS par le biais de l'interface externe ; et
un second sous-module, configuré pour recevoir la valeur de compteur de performance par le biais de l'interface externe envoyée par l'EMS.

16. Calculateur de KPI selon la revendication 14, dans lequel le second module comprend un troisième sous-module configuré pour calculer les données KPI en fonction de la valeur de compteur de performance ; et un quatrième sous-module configuré pour sauvegarder les données KPI dans le quatrième sous-module lui-même ou sauvegarder les données KPI dans un serveur de fichiers.
